# EUROPÄISCHE PATENTSCHRIFT

(11) **EP 0 562 335 B1**
(45) Veröffentlichungstag und Bekanntmachung des Hinweises auf die Patenterteilung: **11.06.1997**
(21) Anmeldenummer: 93103617.2
(22) Anmeldetag: 06.03.1993
(51) Int. Cl.: A61C 13/273, A61C 13/265

(54) **Riegel zur lösbaren Befestigung von Zahnersatzteilen**
Bolt for the removable fastening of dentures
Verrou pour la fixation amovible d'une prothèse dentaire

(30) Priorität: 24.03.1992 DE 4209421
(43) Veröffentlichungstag der Anmeldung: 29.09.1993
(73) Patentinhaber: Rübeling, Günter, D-27507 Bremerhaven (DE)
(72) Erfinder: Rübeling, Günter, D-27507 Bremerhaven (DE)
(74) Vertreter: Eisenführ, Speiser & Partner

(56) Entgegenhaltungen:
- EP-A- 0 254 027
- EP-A- 0 270 108
- DE-A- 3 312 908
- DE-U- 8 517 417
- US-A- 1 765 851

## Beschreibung

Die Erfindung betrifft einen Riegel zur lösbaren Befestigung von Zahnersatzteilen aneinander, welcher an dem einen Zahnersatzteil schwenkbar anzuordnen ist und in der geschlossenen Stellung in eine Ausnehmung des anderen Zahnersatzteils eingreift, mit einem Friktionselement, das zumindest in der geschlossenen Stellung des Riegels eine der Verstellung entgegenwirkende Reibungskraft an dem einen und/oder anderen Zahnersatzteil erzeugt.

Ein solcher Riegel ist beispielsweise aus der DE 35 04 162 C2 oder der DE 35 27 936 A1 bekannt.

Das Friktionselement bei diesen bekannten Riegeln wird von einem Federglied gebildet, das in einer bevorzugten Ausführung aus einer federnden Zunge besteht. Dieses Federglied steht über eine parallel zur Verstellebene verlaufende Oberfläche des Riegelkörpers vor und ist derart federnd vorgespannt, daß es in der geschlossenen Stellung des Riegels an der oberen oder der unteren Fläche der Ausnehmung anliegt. Es können auch mehrere solcher Federglieder bzw. federnden Zungen vorgesehen sein.

Zwar stellt der zuvor beschriebene bekannte Riegel einen erheblichen Fortschritt gegenüber früheren Riegeln dar, bei denen stets die Gefahr bestand, daß sich die Führung der Riegel während relativ kurzer Zeit lockerte und sich somit die Riegel ungewollt öffnete, so daß in regelmäßigen Abständen eine Nachbearbeitung erforderlich war; jedoch hat sich herausgestellt, daß auch bei dem zuvor erwähnten Riegel nach einer gewissen Zeit die die Reibung herstellende Federkraft des Federgliedes verlorengeht. Der Grund hierfür liegt darin, daß das Federglied durch in den Zahnersatzteilen auftretende Druckbewegungen langsam an Wirkung verliert. Diese Druckbewegungen entstehen hauptsächlich beim Kauen. Dann wirken auf die Zahnersatzteile relativ hohe Druckkräfte, die eine - wenn auch geringe - Eigenbewegung der Zahnersatzteile verursachen. Durch diese - nicht vollständig zu verhindernde - Eigenbewegung der Zahnersatzteile werden die Druckkräfte weiter auf den Riegel übertragen. Dabei treffen diese Druckkräfte im wesentlichen lotrecht auf das Federglied und somit direkt entgegengesetzt zur Richtung der von diesem erzeugten Federkraft auf. Dieser Beanspruchung kann das Federglied nur für eine begrenzte Zeit standhalten, so daß es seine Federwirkung im Laufe der Zeit aufgrund der regelmäßig auftretenden Druckkräfte verliert. Die Folge davon ist, daß eine dauerhafte Fixierung des bekannten Riegels in seiner geschlossenen Stellung nicht mehr gewährleistet ist.

Ein weiterer Nachteil des bekannten Riegels besteht darin, daß die Federkraft im wesentlichen nicht einstellbar ist. Um einen sicheren Verschluß des Riegels zu erhalten, ist jedoch eine möglichst genaue Anpassung der Federkraft an die in Abhängigkeit vom gewählten Einsatzort innerhalb des Gebisses gefertigten individuellen Zahnersatzteile notwendig. Auch ist aufgrund der nicht ganz auszuschließenden Fertigungstoleranzen eine individuelle Einstellbarkeit der Federkraft erforderlich. Bei dem bekannten Riegel ist die Einstellung der Federkraft nur während des Herstellungsprozesses möglich, da sich die Federkraft aus der Ausbildung und Geometrie des Federgliedes bzw. der Federzunge ergibt. Eine nachträgliche Änderung und Einstellung der Federkraft - insbesondere wenn diese aufgrund der zuvor geschilderten Situation nachgelassen hat - ist beim bekannten Riegel nicht möglich. Dies würde nämlich eine Änderung in der Ausbildung und Geometrie des Federgliedes bedeuten, was aufgrund des hohen Aufwandes nicht in Frage kommt. Bei der Ausführung als Federzunge ist es zwar denkbar, diese zur Erhöhung der Federkraft entsprechend zu verbiegen, jedoch besteht dabei stets die Gefahr des Abbrechens, so daß auch eine solche Art der Federkraft-Nachjustierung praktisch unmöglich ist.

Ein Riegel gemäß dem Oberbegriff von Anspruch 1 wird in der DE 33 12 908 beschrieben. In diesem Riegel sind durch Anordnung eines oder ggf. auch mehrerer parallel zur Schwenkebene verlaufender Schlitze obere und untere federnde Abschnitte ausgebildet. Diese Abschnitte liegen in der geschlossenen Stellung des Riegels an den Innenflächen der Ausnehmung an und erzeugen somit die der Verstellung entgegenwirkende Reibungskraft. Ein derartiger Riegel kann beispielsweise aus einem mäanderförmig gefalteten Federblech bestehen. Jedoch weist dieser bekannte Riegel die gleichen Nachteile wie der zuvor beschriebene Riegel auf.

Demgegenüber beschreibt die US-A-1 765 851 ein T-Geschiebe zur Verbindung zweier Zahnersatzteile aneinander. Um unerwünschtes Spiel im Geschiebe zu verhindern bzw. zu beseitigen, ist bei diesem bekannten Geschiebe eine in der Patrize sitzende Schraube vorgesehen, die aus dem Kopf der Patrize so weit herausdrehbar ist, daß der Kopf dieser Schraube an der zugewandten Innenfläche der Matrize im wesentlichen 'stramm' anliegt.

In der EP-A-0 254 027 ist ebenfalls ein T-Geschiebe offenbart, an dessen Patrize eine Friktionsplatte angeordnet ist, um ein zwischen Patrize und Matrize auftretendes Spiel auszugleichen bzw. zu beseitigen. Hierzu ist in der Friktionsplatte eine Gewindebohrung ausgebildet, in der ein Gewindestift sitzt, welcher sich am Körper der Patrize abstützt, wodurch die Passung und die Friktionskraft der Patrize in der Matrize eingestellt werden kann. Dies bedingt jedoch eine verhältnismäßig voluminöse Konstruktion, da die Friktionsplatte eine bestimmte Mindestdicke aufweisen muß, um zum einen dem vom Gewindestift erzeugten Reibdruck standhalten zu können und entsprechende Beschädigungen oder sogar ein Durchbrechen zu verhindern und zum anderen einen sicheren Eingriff des Innengewindes der Gewindebohrung mit dem Gewindestift zu gewährleisten.

Es ist Aufgabe der Erfindung, den Riegel der eingangs genannten Art derart zu verbessern, daß die vom Friktionselement erzeugte Reibungskraft auf den individuellen Anwendungsfall einstellbar ist und über einen relativ langen Zeitraum erhalten bleibt.

Diese Aufgabe wird erfindungsgemäß gelöst durch einen Riegel zur lösbaren Befestigung von Zahnersatzteilen aneinander, welcher an dem einen Zahnersatzteil schwenkbar anzuordnen ist und in der geschlossenen Stellung in eine Ausnehmung des anderen Zahnersatzteils eingreift, mit einem Friktionselement, das zumindest in der geschlossenen Stellung des Reges eine der Verstellung entgegenwirkende Reibungskraft an dem einen und/oder anderen Zahnersatzteil erzeugt, gekennzeichnet durch eine zwei gegenüberliegende Oberflächen des in das Zahnersatzteil einschwenkbaren Abschnittes des Riegelkörpers miteinander verbindende Durchgangsgewindebohrung und eine darin sitzende und das Friktionselement bildende Madenschraube, deren Kopf sich innerhalb der Gewindebohrung befindet und deren gegenüberliegendes freies Ende zur Einstellung der Friktionskraft in der geschlossenen Stellung des Riegels aus der Gewindebohrung herausragt.

Mit Hilfe der erfindungsgemäßen Konstruktion läßt sich besonders einfach die gewünschte Reibungskraft auf den individuellen Anwendungsfall einstellen und über einen relativ langen Zeitraum aufrechterhalten.

Bei einer weiteren gegenwärtig besonders bevorzugten Ausführung wirkt das freie Ende der Madenschraube auf ein am Riegelkörper einseitig befestigtes oder angelenktes Plättchen, das sich zumindest in der geschlossenen Stellung des Riegels in Reibberührung mit dem einen und/oder anderen Zahnersatzteil befindet. Mit Hilfe eines derartigen Plättchens wird die Reibungskraft besonders flächig verteilt und erhält somit eine größere Wirkung. Im allgemeinen steht das Plättchen in mindestens einer Schraubstellung der Madenschraube von einer Oberfläche des Riegelkörpers vor. Eine besonders platzsparende Anordnung des Plättchens ergibt sich dadurch, daß es in einer im Riegelkörper ausgebildeten Aussparung sitzt.

Bei einer weiteren Ausführung ist die Madenschraube im wesentlichen parallel zur Schwenkachse des Riegels bewegbar, wodurch eine besonders gute Friktionswirkung erzielt wird.

Bei einem Riegel, welcher ein sich rechtwinklig zur Schwenkachse erstreckendes Flachteil mit einer vorspringenden Nase und ein wulstartiges Betätigungsteil aufweist, kann die Gewindebohrung im wesentlichen zwischen der vorspringenden Nase und dem Betätigungsteil.

Nachfolgend wird ein bevorzugtes Ausführungsbeispiel der Erfindung anhand der beiliegenden Figuren näher erläutert. Es zeigen:
- Figur 1: eine perspektivische Ansicht auf die Oberseite eines Riegels;
- Figur 2: den Riegel in der gleichen Darstellung wie Figur 1, jedoch ohne Gelenkstift und Reibplättchen;
- Figur 3: einen Querschnitt durch den Riegel; und
- Figur 4: eine perspektivische Ansicht auf die Unterseite des Riegels.

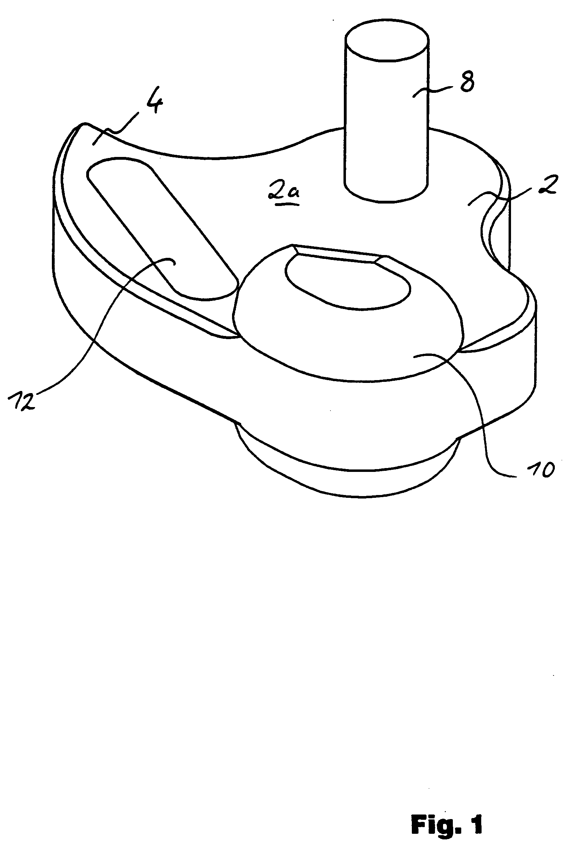

Wie insbesondere die Figuren 1, 2 und 4 erkennen lassen, weist der dort dargestellte Riegel ein Flachteil 2 auf, der eine vorspringende Nase 4 besitzt, die zur eigentlichen Verriegelung verwendet wird. Im Flachteil 2 ist im Bereich außerhalb der vorspringenden Nase 4 eine Bohrung 6 ausgebildet, durch die ein Gelenkstift 8 gesteckt ist. Ferner weist der dargestellte Riegel ein wulstartiges Betätigungsteil 10 auf, das mit einer Griffkerbe versehen ist.

Der Riegel wird zur lösbaren Befestigung von Zahnersatzteilen aneinander verwendet. Die Zahnersatzteile können z.B. aus Kronen, Brücken oder Teilprothesen bestehen, welche im allgemeinen von einem metallischen Primärteil und einem ebenfalls aus Metall gefertigten Sekundärteil gebildet wird.

Obwohl in den Figuren die Anordnung des Riegels an derartigen Zahnersatzteilen nicht dargestellt ist, soll zum besseren Verständnis kurz hierauf eingegangen werden. Gewöhnlich ist der Riegel mit seinem Gelenkstift 8 im allgemeinen horizontal schwenkbar am Sekundärteil gelagert. Das Primärteil weist eine Aussparung auf, deren Form im wesentlichen der Form des vorderen Abschnittes des Flachteils 2 mit der Nase 4 entspricht. Das Sekundärteil ist mit einem Durchbruch versehen, durch den sich der Riegel mit seinem Flachteil 2 erstreckt. Oberhalb und unterhalb dieses Durchbruches sind Bohrungen zur Aufnahme des Gelenkstiftes 8 vorgesehen. In der geschlossenen Stellung greift der Riegel mit seiner Nase 6 in die zuvor erwähnte Aussparung im Primärteil ein. Dabei schließt der Riegel im allgemeinen bündig mit der Außenseite des Sekundärteils ab. Lediglich das Betätigungsteil 10 ragt ein wenig heraus, damit es leichter zum Verschwenken des Riegels gegriffen werden kann.

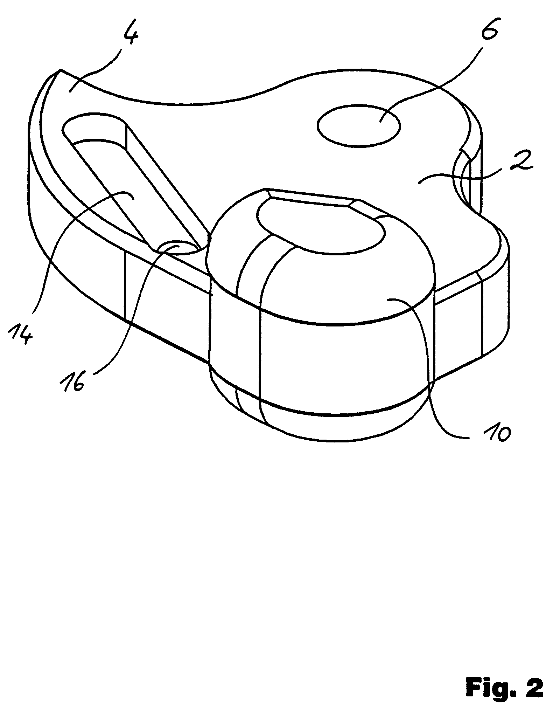

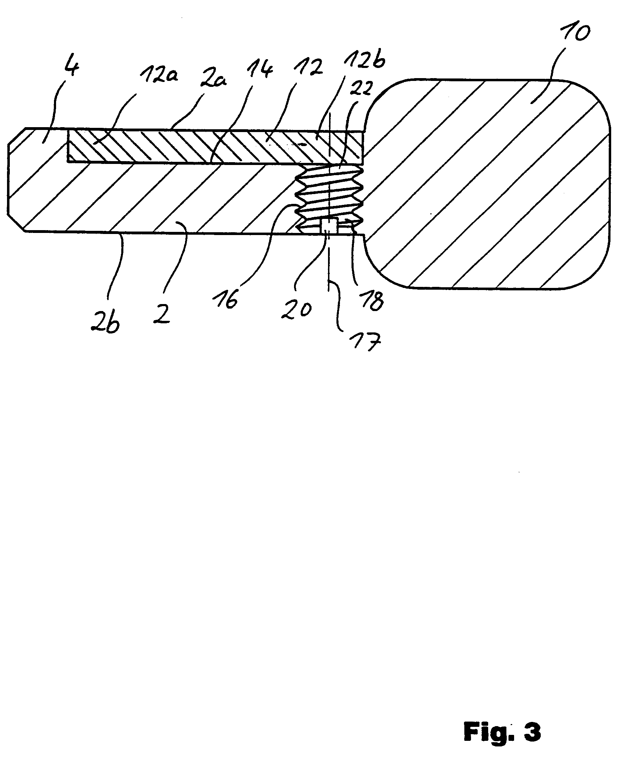

Damit in der geschlossenen Stellung zwischen dem Riegel und der Innenfläche(n) der Ausnehmung im Primärteil und/oder des Durchbruches im Sekundärteil eine ausreichende Reibung erzeugt wird, die einer unerwünschten Verstellung entgegenwirkt, ist ein längliches Reibplättchen 12 vorgesehen (vgl. Figuren 1 und 3), das mit seiner Außenfläche in eine Reibung erzeugende Anlage an eine Innenfläche der Aussparung gebracht wird. Das längliche Plättchen 12 sitzt in einer entsprechenden Aussparung 14, die an der Oberseite 2a des Flachteils 2 ausgebildet ist und sich von dem wulstartigen Betätigungsteil 10 in die vorspringende Nase 4 hinein erstreckt, wie insbesondere die Figuren 2 und 3 erkennen lassen. Das Plättchen 12 ist mit seinem in die Nase 4 des Flachteils 2 hineinragenden Ende 12a am Flachteil 2 angelenkt oder - beispielsweise durch Löten - befestigt und mit seinem gegenüberliegenden Ende 12b gegenüber dem Flachteil 2 verschwenkbar.

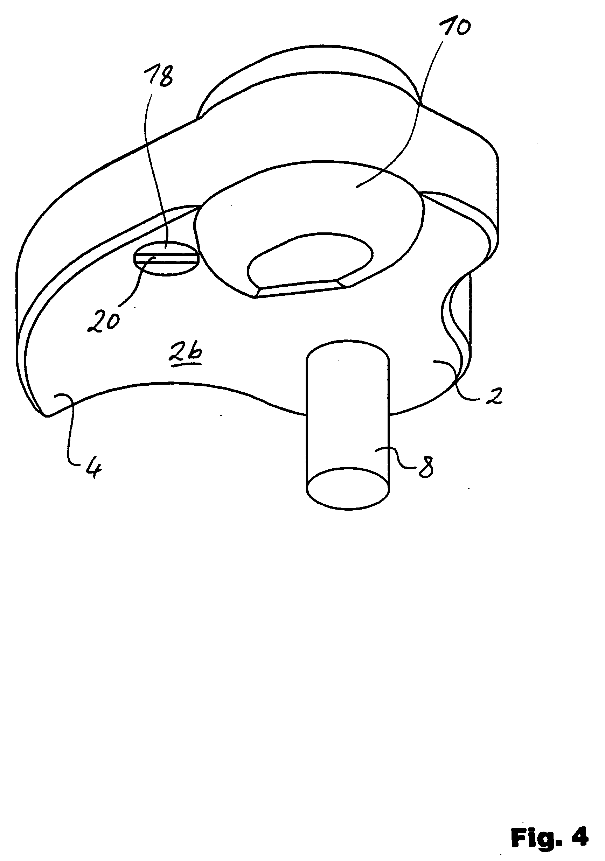

Wie die Figuren 2 und 3 zeigen, schließt sich an dem dem wulstartigen Betätigungsteil 10 benachbarten Ende der Aussparung 14 eine Gewindebohrung 16 an, die den Boden der Aussparung 14 mit der Unterseite 2b des Flachteils 2 verbindet. Die Gewindebohrung 16 ist mit ihrer Achse 17 parallel zur Achse der Bohrung 6 und des Gelenkstiftes 8 und somit zur Schwenkachse des Riegels angeordnet. In der Gewindebohrung 16 sitzt eine Madenschraube 18, deren Länge etwa der Länge der Gewindebohrung 16 und somit der Dicke des Flachteils 2 zwischen dessen Unterseite 2b und der Aussparung 14 entspricht. Die Schraube 18 sitzt in der Gewindebohrung 16 derart, daß ihr Kopf mit dem Schlitz 20 zur Unterseite 2b des Flachteils 2 gewandt ist (vgl. Figur 4), während sich das gegenüberliegende Ende 22 der Schraube 18 zur Aussparung 14 und somit zu dem darin sitzenden Plättchen 12 erstreckt (vgl. Figur 3).

Durch Drehen der Schraube 18 in Richtung auf das Plättchen 12 gelangt das Ende 22 der Schraube 18 in Anlage an die Unterseite des Endes 12b des Plättchens 12 . Bei Weiterdrehen der Schraube 18 wird das Plättchen 12 von dieser mit seinem Ende 12b aus der Oberseite 2a des Flachteils 2 ein wenig herausgedrückt, wobei das Plättchen 12 um sein am Flachteil 2 befestigtes Ende 12a entsprechend verschwenkt wird. Das so von der Oberseite 2a des Flachteils 2 abstehende Ende 12b des Plättchens 12 wird nun beim Schließen des Riegels in Anlage an die zugewandte Innenfläche der Aussparung im Primärteil und/oder des Durchbruches im Sekundärteil gebracht und durch die Wirkung der Schraube 18 gegen diese Innenfläche gedrückt, wodurch eine der Verstellung des Riegels entgegenwirkende Reibungskraft erzeugt wird. Durch entsprechendes Verdrehen der Schraube 18 kann diese Reibungskraft präzise eingestellt und somit an die vorhandene Geometrie der Aussparung im Primärteil und/oder des Durchbruches im Sekundärteil angepaßt werden. Demnach dient die Schraube 18 zur Erzeugung der erforderlichen Reibungskraft und somit als Friktionselement, welches für eine ausreichende Reibung zwischen dem Riegel in seiner geschlossenen Stellung und dem Primärteil und/oder Sekundärteil sorgt.

Außerdem entfaltet die Schraube 18 auch eine gewisse Federwirkung, sofern sie aus einem elastischen Material besteht, welches beispielsweise auch Metall sein kann.

Entgegen der zuvor beschriebenen Ausführung ist es aber auch denkbar, daß das Plättchen 12 weggelassen werden kann und die Schraube 18 mit ihrem freien Ende 22 von der Oberseite 2a des Flachteils 2 absteht und direkt in Reibanlage mit der Aussparung im Primärteil und/oder dem Durchbruch im Sekundärteil gebracht werden kann. Auch ist es denkbar, anstelle der Schraube 18 einen in axialer Richtung verschiebbaren Stift oder ein anderes Friktionselement zu verwenden, welches sich mit dem Flachteil 2 des Riegels derart in Eingriff befindet, daß es - wie die Schraube 18 - in Längsrichtung verschiebbar und dabei in jeder Lage gegenüber dem Riegel fixierbar ist. Dabei ist es nicht unbedingt notwendig, daß die Bewegungsrichtung des Friktionselementes parallel zur Schwenkachse des Riegels verläuft, sofern sie in einem Winkel zu einer Oberfläche des Riegels gerichtet ist, damit Reibdruck auf eine Innenfläche der Aussparung im Primärteil und/oder des Durchbruches im Sekundärteil erzeugt werden kann.

## Patentansprüche

1. Riegel zur lösbaren Befestigung von Zahnersatzteilen aneinander, welcher an dem einen Zahnersatzteil schwenkbar anzuordnen ist und in der geschlossenen Stellung in eine Ausnehmung des anderen Zahnersatzteils eingreift, mit einem Friktionselement (18), das zumindest in der geschlossenen Stellung des Riegels eine der Verstellung entgegenwirkende Reibungskraft an dem einen und/oder anderen Zahnersatzteil erzeugt,
gekennzeichnet durch eine zwei gegenüberliegende Oberflächen (2a, 2b) des in das Zahnersatzteil einschwenkbaren Abschnittes des Riegelkörpers (2) miteinander verbindende Durchgangsgewindebohrung (16) und eine darin sitzende und das Friktionselement bildende Madenschraube (18), deren Kopf sich innerhalb der Gewindebohrung (16) befindet und deren gegenüberliegendes freies Ende (22) zur Einstellung der Friktionskraft in der geschlossenen Stellung des Riegels aus der Gewindebohrung (16) herausragt.

2. Riegel nach Anspruch 1,
dadurch gekennzeichnet, daß das freie Ende (22) der Madenschraube (18) auf ein am Riegelkörper (2) einseitig befestigtes oder angelenktes Plättchen (12) wirkt, das sich zumindst in der geschlossenen Stellung des Riegels in Reibberührung mit dem einen und/oder anderen Zahnersatzteil befindet.

3. Riegel nach Anspruch 2,
dadurch gekennzeichnet, daß das Plättchen (12) in mindestens einer Schraubstellung der Madenschraube (18) von einer Oberfläche (2a) des Riegelkörpers (2) vorsteht.

4. Riegel nach Anspruch 2 oder 3,
dadurch gekennzeichnet, daß das Plättchen (12) in einer im Riegelkörper (2) ausgebildeten Aussparung (14) sitzt.

5. Riegel nach mindestens einem der Ansprüche 1 bis 4,
dadurch gekennzeichnet, daß die Madenschraube (18) im wesentlichen parallel zur Schwenkachse des Reges bewegbar ist.

6. Riegel nach mindestens einem der Ansprüche 1 bis 5, welcher ein sich rechtwinklig zur Schwenkachse erstreckendes Flachteil (2) und ein wulstartiges Betätigungsteil (10) aufweist,
dadurch gekennzeichnet, daß die Gewindebohrung (16) im Flachteil (2) angeordnet ist.

7. Riegel nach Anspruch 6, bei welchem das Flachteil (2) mit einer vorspringenden Nase (4) versehen ist,
dadurch gekennzeichnet, daß die Gewindebohrung (16) im wesentlichen zwischen der Nase (4) und dem Betätigungsteil (10) angeordnet ist.

## Claims

1. Locking device for releasably fastening denture parts to each other, said device being pivotably arrangeable on a first denture part and in the closed position engaging in a recess of a second denture part, said locking device having a friction element (18), which in at least the closed position of the locking device produces a frictional force on the first and/or second denture part which counteracts displacement,
characterised by a threaded through hole (16), which connects two opposing surfaces (2a, 2b) of the portion of the locking device body (2) which is pivotable into the denture part with each other, and a grub screw (18) which sits within said hole and forms said friction element, wherein the head of the grub screw is located inside the threaded through hole (16) and the opposing free end (22) of the grub screw projects from the threaded through hole (16) as adjustment for the frictional force in the closed position.

2. Locking device according to Claim 1,
characterised in that the free end (22) of the grub screw (18) acts on a plate (12) coupled or fastened on one side to the locking device body (2), the plate (12) being positioned at least in the closed position in frictional contact with the first and/or second denture part.

3. Locking device according to Claim 2,
characterised in that in at least one screw position of the grub screw (18) the plate (12) protrudes from a surface (2a) of the locking device body (2).

4. Locking device according to Claim 2 or 3,
characterised in that the plate (12) sits in a recess (14) formed in the locking device body (2).

5. Locking device according to at least one of Claims 1 to 4,
characterised in that the grub screw (18) is movable in a direction essentially parallel to the pivot axis of the locking device.

6. Locking device according to at least one of Claims 1 to 5, comprising a flat portion (2) extending perpendicular to the pivot axis and a bulbous operating portion (10),
characterised in that the threaded hole (16) is arranged in the flat portion (2).

7. Locking device according to Claim 6, wherein the flat portion (2) is provided with a projecting nose (4),
characterised in that the threaded hole (16) is arranged essentially between the nose (4) and the operating portion (10).

## Revendications

1. Verrou destiné à la fixation amovible de pièces de rechange dentées l'une contre l'autre, qui doit être monté en rotation sur l'une des pièces de rechange dentées et qui, en position fermée, s'engage dans un creux de l'autre pièce de rechange dentée, comportant un élément de friction (18) qui génère au moins en position fermée du verrou, une force de friction opposée au déplacement, sur l'une et/ou l'autre pièce de rechange dentée, caractérisé par un alésage fileté de passage (16) assemblant l'une avec l'autre deux surfaces opposées (2a, 2b) du segment pivotant dans la pièce de rechange dentée du corps du verrou (2) et par un goujon fileté (18) qui est placé dans cet alésage fileté, forme l'élément de friction, dont la tête se trouve à l'intérieur de l'alésage fileté (16) et dont l'extrémité libre opposée (22) fait saillie de l'alésage fileté (16) pour régler la force de friction en position fermée du verrou.

2. Verrou selon la revendication 1, caractérisé en ce que l'extrémité libre (22) du goujon fileté (18) agit sur une plaquette (12) fixée ou articulée d'un seul côté sur le corps du verrou (2) et qui se trouve, au moins en position fermée du verrou, en contact par friction avec l'une et/ou l'autre pièce de rechange dentée.

3. Verrou selon la revendication 2, caractérisé en ce que la plaquette (12) dépasse d'une surface (2a) du corps du verrou (2) dans au moins une position vissée du goujon fileté (18).

4. Verrou selon la revendication 2 ou la revendication 3, caractérisé en ce que la plaquette (12) se trouve dans un évidement (14) formé dans le corps du verrou (2).

5. Verrou selon au moins l'une quelconque des revendications 1 à 4, caractérisé en ce que le goujon fileté (18) peut se déplacer sensiblement parallèlement à l'axe de pivotement du verrou.

6. Verrou selon au moins l'une quelconque des revendications 1 à 5, qui présente une pièce plane (2) s'étendant perpendiculairement à l'axe de pivotement et une pièce d'actionnement (10) renflée, caractérisé en ce que le goujon fileté (16) est disposé dans la pièce plane (2).

7. Verrou selon la revendication 6, dans lequel la pièce plane (2) est munie d'un nez (4) formant saillie, caractérisé en ce que le goujon fileté (16) est disposé sensiblement entre le nez (4) et la pièce d'actionnement (10).
